# EUROPEAN PATENT SPECIFICATION

(11) **EP 2 690 408 B1**
(45) Date of publication and mention of the grant of the patent: **22.02.2017**
(21) Application number: 12178014.2
(22) Date of filing: 26.07.2012
(51) Int. Cl.: G01C 21/36, G01C 21/34

(54) **Method of operating a navigation system and navigation system**
Verfahren zur Bedienung eines Navigationssystems und Navigationssystem
Procédé de fonctionnement d'un système de navigation et système de navigation

(43) Date of publication of application: 29.01.2014
(73) Proprietor: Harman Becker Automotive Systems GmbH, 76307 Karlsbad (DE)
(72) Inventor: Hansen, Lars, 80939 Munich (DE); Mitrakis, Stavros, 85551 Kirchheim-Heimstetten (DE)
(74) Representative: Bertsch, Florian Oliver

(56) References cited:
- DE-A1-102009 040 966
- DE-A1-102010 049 661
- US-A1- 2007 021 909

## Description

### Technical Field

Various embodiments relate to a method of operating a navigation system of a vehicle and to a navigation system for use in a vehicle. In particular, various embodiments relate to graphically indicating in a map view an amount of available energy of the vehicle.

### Background

The functionality of navigation systems in vehicles has been presently extended to estimating a reachability of geographical locations given a current amount of available energy of the vehicle. In particular, cars powered by conventional fuel provide a comparably large amount of energy storage and therefore are capable of travelling larger distances, i.e., have the potential to reach geographical locations being more remote; while vehicles powered by alternative energies, such as hydrogen-powered cars or hybrid cars or electric cars, may have a comparably smaller cruising range, i.e., may only reach geographical locations which are comparably closer to the current location. While for such scenarios, on the one hand, a particular accurate estimation of the cruising range may be desired in order to accurately predict whether a certain geographical location is reachable or not, on the other hand, it may be desired to provide a user of the navigation system with an accurate overview of the situation.

In existing systems, such information can be displayed as a current cruising range of the vehicle to the driver as a numerical value, e.g., "327 km". It may be also displayed as a cruising range in form of a range polygon in a map view, the range polygon surrounding the geographical area that is reachable by the vehicle considering the current amount of available energy, the road network, and the current location of the vehicle. In order to provide such a cruising range being dependent on the road network, a route search may be performed using techniques, such as the Dijkstra algorithm, to expand route links being associated with energy consumption costs. From a comparison of the current amount of available energy with the energy consumption costs for the expanded route links, it may be possible to determine the amount of energy which is necessary to travel to a given point in the road network.

US2007/021909, DE102009040966 and DE102010049661 disclose navigation systems that indicate reachable and unreachable road segments or regions using different colors.

However, such solutions suffer from certain limitations. The displaying of, e.g., a planned route of the navigation system and the displaying of the current cruising range can be at different places in the vehicle, e.g., arranged in the vehicle's central console and in the central instrument panel, respectively. It may not be possible to perceive the route and the cruising range at one glance.

While for the driver it may be possible to perceive the information of the current cruising range indicating the outermost reachable locations, it may not be possible for the driver to perceive the amount of available energy for geographical locations within the cruising range, let alone for geographical locations along the planned route. This can make it difficult for the driver to determine an optimum point for refuelling of the vehicle. This may result in critical and/or inefficient situations as will be outlined in the following: conventional cruising ranges are calculated based on current conditions of the vehicle. For example, for determining the current cruising range, a moving average of the current energy / fuel consumption may be used. If the vehicle travels, e.g., at a large velocity on a highway, the cruising range may be particularly low, as the current average of the energy / fuel consumption is comparably high. In such a scenario, the driver of the vehicle may be tempted to fill up at the highway where the price of energy / fuel is comparably high. Shortly after refuelling, the driver of the vehicle may leave the highway following the determined route and proceed travelling on a countryside road. Here, the average velocity is reduced so that the average of the energy / fuel consumption also decreases significantly. Accordingly, the cruising range increases. In such a scenario, an accurate determining of the cruising range as well as an indication of the amount of available energy/fuel for the route of the vehicle would have allowed the driver of the vehicle to postpone the refuelling to a later point in time after having left the highway where fuel prices are lower. Such observations also apply to scenarios where the overall fuel consumption is displayed together with gas stations indicated separately in a map view.

Accordingly, it would be helpful for a driver to have a system that determines and graphically indicates the amount of available energy for road segments within the cruising range.

### Summary

This need is met by the features of the independent claims. The dependent claims define embodiments.

According to an aspect, a method of operating a navigation system of a vehicle is provided. The method comprises performing a route search to determine a route along road segments from a current location of the vehicle to a destination and determining a current amount of available energy of the vehicle. The method further comprises determining accumulated energy consumption costs required for travelling to a respective one of the plurality of the road segments along the predetermined route. The method further comprises, for a plurality of the road segments, comparing the current amount of available energy with the accumulated energy consumption costs required for travelling to a respective one of the plurality of the road segments along the determined route to obtain an amount of available energy when reaching the respective road segment. The method further comprises graphically indicating the route in a map view, wherein each of the plurality of the road segments is indicated using colours, the colours being indicative of the amount of available energy when reaching the respective road segment, wherein consecutive road segments in the map view are indicated using gradually changing colours.

Various techniques are used to perform a route search such as the Dijkstra algorithm. Such techniques may expand route links along the road segments, wherein the route links are associated with costs, e.g. in preferred embodiments energy consumption costs, of travelling along the respective road segment. The costs may correspond to a travel time for travelling along the respective road segment and/or a covered distance when travelling along the respective road segment and/or energy consumption costs, i.e., an amount of energy necessary for travelling along the respective road segment. Any one of these or a combination of these costs may be used to determine the route, wherein the route may be optimized with respect to consumption of the costs, e.g., require a minimum total amount of the cost.

The current location of the vehicle may be determined using, e.g., a global positioning system (GPS) or an inertial navigation system (INS) which corresponds to, e.g., a gyroscope and acceleration sensors. Also, odometry data of the vehicle, such as turning speed of the wheels etc., may be used. Such data may be available on a vehicle bus system of the vehicle, such as MOST, CAN, FlexRay, etc.

For example, in one embodiment, the accumulated energy consumption costs may be determined based on the distance between the current location and the respective road segment. Longer (shorter) distances may correspond to larger (smaller) accumulated energy consumption costs required for travelling to the respective one of the plurality of the road segments. Such a determining of the accumulated energy consumption costs may be independent of the geographical direction, i.e., may correspond to circular shaped lines of equal accumulated energy consumption centered around the current location. Such a determining may be further based on averaged historical energy consumption costs for respective distances or based on moving averages of the energy consumption. It may also be possible to consider, to some larger or smaller degree, further data, e.g., data which is used in connection with the route search. For example, a map database from which data of the road segments is loaded, may further comprise information on the elevation, for example in the form of a digital terrain model. Positive elevation differences between the current location and the respective road segments may increase the accumulated energy consumption costs required for the travelling to the respective one of the plurality of the road segments.

The comparing may be performed for all of the plurality of road segments, i.e., for all road segments on the route, or only for a subfraction, i.e., each third or tenth road segment etc. Depending on the desired accuracy these parameters may be chosen accordingly. It may be preferred in certain situations to compare for all of the plurality of road sements to obtain a high accuracy. Respectively, it may be possible to indicate all or only a fraction of the road segments using the colours. For example, it may be possible to indicate only those road segments using colors for which the amount of available energy falls below a threshold, i.e., for which the amount of available energy runs low. In a further embodiment the first road segment from the current position may be skipped when indicating using the colours.

In various embodiments it may be possible to graphically indicate the amount of avaible energy using the colours by coloring the entire road segment. However, it may also be possible to use dots of color arranged next to the respective road segments in the map view. It may also be possible to graphically indicate the amount of avaible energy using a separate line arranged neigboring to the respective road segments. It may also be possible to graphically indicate the amount of avaible energy coloring the borders of the road segments, i.e., provide a colored frame; this may be referred to as "outline". It may also be possible to graphically indicate the amount of avaible energy using a pattern or texture for the road segments. It may also be possible to graphically indicate the amount of avaible energy using a shading effect of the respective road segments, e.g., in a 3d map view. It may also be possible to graphically indicate the amount of avaible energy using an animated representation of the respective road segment, e.g., different speeds of animation being indicative of the amount of available energy. It may also be possible to graphically indicate the amount of avaible energy using different widths of the respective road segment; e.g., wider road segments may indicate a higher amount of available energy.

In various embodiments it may be possible to provide additional indication of the amount of available energy. For example, it may be possible to provide an additional information symbol between the colours orange and red, i.e., when the amount of available energy falls below a predefined threshold. An acoustic and / or optical information may be provided that a certain gas station is the last one which can be reached given the current amount of available energy. It may be possible to provide connection lines to the last reachable gas station. It may be possible to only graphically indicate those gas stations which provide the required fuel. It may be possible to graphically indicate only those fuel station which are still open at an estimated time of arrival at the respective fuel station.

In an embodiment, it may be possible to perform the comparing and the graphically indicating for fractions or parts of a road sement, i.e., subdivide the road segment into smaller units. This may be in particular useful for comparably long road segments.

By graphically indicating the route in the map view by using coloured road segments, where the colours are indicative of the amount of available energy, a quick perception of this information by the driver may be possible. This may allow the driver to accurately determine when and where refuelling of the vehicle may become necessary because the amount of available energy reaches a critical range. This may allow a more accurate pre-estimation of the route ahead. In other words, the colours used for the road segments in the map view may be considered as being a measure for the probability of reaching the respective road segment without refuelling.

It may also be possible that the accumulated energy consumption costs to travel to the respective road segment are determined based on energy consumption costs associated with the road segments along the route between the current location and the respective road segment. I.e., it may be possible to take into account the network of the road segments. In particular, energy consumption costs may be provided from the map database together with the data of the road segments. E.g., such energy consumption costs may specify the amount of energy necessary to travel along the road segment. It may be possible that the map database explicitly provides the energy consumption costs for all the road segments. However, it may also be possible that the energy consumption costs are derived from other data stored for the road segments in the map database; such other data may be the length of a road segment, a street classification or hierarchy of the road segment (e.g. highway, arterial road, feeder road, local road), positioning within or outside an urban area, number of intersections, elevation difference, traffic congestion, etc. In such a scenario, it may be possible to particularly accurately determine the accumulated energy consumption costs.

To this respect, it may be possible that the route search is performed using the energy consumption costs associated with the road segments to determine the route being optimized with respect to energy consumption costs necessary to reach the destination. For example, this may correspond to performing the route search algorithm, e.g. the Dijkstra's algorithm or any other algorithm, using the energy consumption costs. Then, the route from the current location to the destination may be the one route which has minimized total energy consumption. Such a route may be referred to as an eco-route.

Conventional techniques for estimating the amount of available energy of the vehicle, e.g., estimating a cruising range of the vehicle, may be associated with high computational efforts. Therefore, a permanent executing and update of the cruising range may slow down the operation of the navigation system. This may cause performance bottlenecks. The method according to the presently discussed aspect may require a comparably small amount of computational efforts. This may be because in difference to an entire cruising range calculation as set forth above, e.g., for all locations of the network of the road segments, only the route determined by the route search may be provided with the indication of the amount of available energy. The estimation of the amount of available energy may be accordingly limited to those road segments being situated along the route.

The determining of the current amount of available energy may be based on sensor data of a fuel level meter. E.g., the navigation system may be a built-in navigation system of the vehicle. In such a case, it may be possible to provide connection to, e.g., the vehicle bus system where data on such information as the fuel level may be available. For an electrically powered car, the fuel level meter may correspond to a state of charge estimating unit, indicating the amount of available electrical energy.

It may also be possible that the determining of the current amount of available energy is based on a user input and/or predefined system settings of the navigation system. It may be possible that the navigation system is a stand-alone unit, e.g. a personal navigation device. In such a case, there may be limited number of possibilities of automatically providing up-to-date information on the amount of available energy as no fixed connection to the respective sensors of the vehicle may be available. In such a case, it may be possible that the user manually enters a current amount of available energy or corrects a pre-calculated amount of available energy by the difference to the correct amount. It may also be possible that the navigation system derives the amount of available energy from a prior user input, e.g., together with information on the distance travelled in the meantime. E.g., the user may indicate a point in time when refuelling occurs. Then the navigation system may track the covered distance since that time of refuelling and determine the current amount of available energy. This may occur in connection with the predefined system settings which may be indicative of an average energy consumption of the vehicle.

The predefined system settings may relate to elements selected from the group consisting of: type of the vehicle, historical driver habits, average energy consumption, vehicle consumption curves. E.g. it may be possible that the user manually specifies the average energy consumption. It may also be possible that the manufacturer or the user of the navigation system specifies the type of the vehicle, in which the navigation system is used. The type of the vehicle may be indicative of the average energy consumption. Historical driver habits (such as average velocity, gear change preferences, etc.) may be indicative of the average energy consumption. The vehicle consumption curves may be downloaded from the internet.

It may be possible that the method according to the present aspect further comprises receiving, from a user interface, a user setting of a correlation between the colours and the amount of available energy. In such a case, the user may manually specify which colours indicate which amount of available energy in the map view.

It may also be possible that the method comprises establishing a correlation between the colours and the amount of available energy such that the colours have an announcement effect. The correlation may be a default correlation. The correlation may be chosen such that the colours agree with common standards, e.g., green indicating a large amount of available energy and red indicating zero amount of available energy. Intermediate amounts of available energy may be indicated using colours arranged in the colour spectrum in-between red and green, e.g., olive, yellow, orange. Such an announcement effect may be easily understood by a large number of users. The establishing may be performed automatically or manually.

To this respect, it may be possible that neighbouring road segments in the map view are indicated using gradually changing colours. Different colour spaces are known which may define colours using different parameters, such as hue, saturation and lightness, i.e., the so called HSL-space, or amount of different colours (e.g., cyan, magenta, yellow and key, i.e., the so called CMYK-space). It may be possible to choose the colours of consecutive or neighbouring road segments in the map view such that the used colours are neighbouring in a respective colour space. A gradual change of the colours may increase the perceivability in the map view.

It may further be possible to indicate at least some of the plurality of road segments with associated icons, wherein the icons are graphical representations of an operational state of the vehicle given the respective amount of available energy. E.g. the icons may be animated icons. E.g. the icons may correspond to a vehicle, which shows turning wheels and a happy driver (large amount of available energy), a vehicle with wads of smoke (critical amount of available energy), and a vehicle where the driver is pushing the vehicle (zero amount of available energy). Additionally, the icons may be coloured as the respective road segments, e.g., using the same correlation between the colours and the amount of available energy as set forth above. It should be understood that the type of the icons used is not particularly limited, in particular when the icons provide an announcement effect to the user and are easy to understand.

The determining of the current amount of available energy, the determining of the accumulated energy consumption costs, the comparing of the current amount of available energy with the accumulated energy consumption costs, and the graphically indicating may be continuously performed using a refresh rate. For example, the refresh rate may be pre-defined or may be dependent on energy consumption parameters, e.g., a moving average of the energy consumption. By such means, it may be possible to accurately indicate the amount of available energy at all times.

It may also be possible to store the amount of available energy when reaching the respective road segment and, when reaching the respective road segment, determining the current amount of available energy at that time and executing a threshold comparison between the previously stored amount of available energy and the current amount of available energy and selectively performing anew, based on the threshold comparison, for the respective road segments ahead the following steps: the determining of the accumulated energy consumption costs, the comparing of the current amount of available energy with the accumulated energy consumption costs, and the graphically indicating. These steps may be performed permanently, e.g., at a given refresh rate, until the target is reached. By such means, it may be possible to determine if the previous estimation of the amount of available energy is valid or whether unexpected deviations in the actual energy consumption from the estimated energy consumption had occurred. In case of deviations, by re-calculation the accuracy may be increased. In the case of navigation systems without connection to the vehicle, it may be possible to, e.g., compare an estimated time of arrival at the respective road segment with the real time of arrival and execute the threshold comparison based on these values.

According to a further aspect, a navigation system for use in a vehicle is provided. The navigation system comprises a positioning unit, a processor, and a display. The positioning unit is configured to determine the current position of the vehicle. The processor is configured to perform the following steps: Performing a route search to determine a route along the road segments from the current location of the vehicle to a distination; and determining a current amount of available energy of the vehicle; and determining accumulated energy consumption costs required for travelling to a respective one of the plurality of the road segments along the determined route; and for a plurality of the road segments, comparing the current amount of available energy with the accumulated energy consumption costs to obtain an amount of available energy when reaching the respective road segment. The display is configured to perform the following step: graphically indicating the route in a map view, wherein each of the plurality of the road segments is indicated using colours, the colours being indicative of the amount of available energy when reaching the respective road segments.

For such a system, effects may be obtained which are comparable to the effects obtained for the method of operating the navigation system according to the further aspect of the invention.

It is to be understood that the features mentioned above and those yet to be explained below may be used not only in the respective combinations indicated, but also in other combinations or isolation without departing from the scope of the invention.

### Brief description of the drawings

In the following, the various embodiments of the invention will be explained in further detail with respect to embodiments illustrated in the accompanying drawings. In these drawings,
FIG. 1 is a schematic illustration of a navigation system;
FIG. 2A is a map view where road segments of a route are indicated using colours, the colours being indicative of the amount of available energy at the respective road segment;
FIG. 2B is the map view of FIG. 2A, where an alternative embodiment of determining the amount of available energy is illustrated;
FIG. 2C is the map view of FIG. 2A, where yet an alternative embodiment of determining the amount of available energy is illustrated.
FIG. 3 is a correlation between the colours of FIG. 2A and the amount of available energy; and
FIG. 4 is a flowchart of a method of operating a navigation system.

### Detailed description

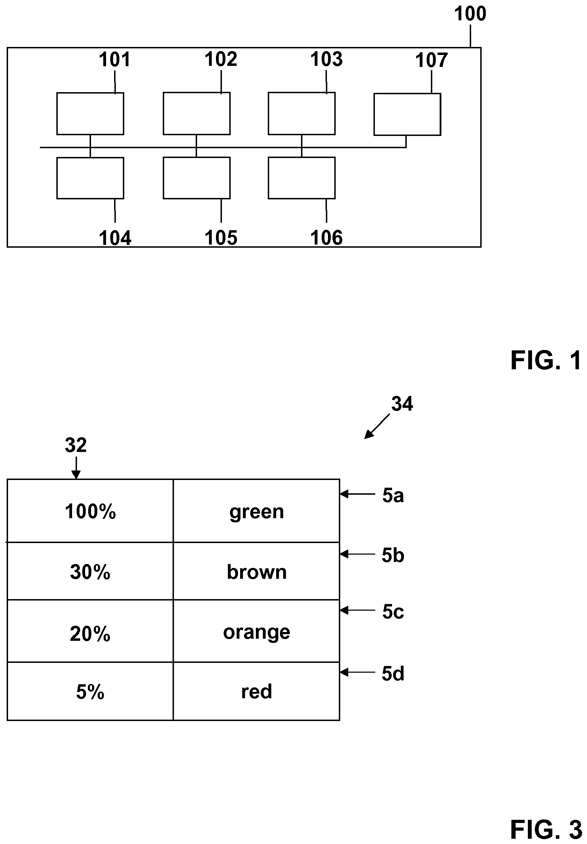

FIG. 1 is a schematic illustration of a navigation system 100. The navigation system 100 contains a map database 101. The map database 101 contains digital map data, i.e., data of a network of road segments. The digital map data can be used by a processor 102 to perform a route search. The route search provides an optimized route between an origin and a destination. The route is optimized with respect to certain costs associated with the road segments of the digital map data. The costs can correspond to travel time, distance, energy consumption, or any combination thereof. It is possible that the digital map data of the map database 101 provides all these costs, while the processor 102 performs the route search only with respect to one of these costs. The processor 102 is further configured to determine accumulated energy consumption costs required for travelling to a respective one of the road segment along the route. E.g. for this determining of the accumulated energy consumption costs to reach the respective road segment, the processor 102 can use input from a user interface 104 and/or input from sensors 105 on an average energy consumption and a current amount of available energy. The sensor 105 may be a fuel levelmeter indicating a current amount of available energy/fuel and possibly tracking a rate of decrease, i.e., a consumption.

The processor 102 can determine the accumulated energy consumption costs independent of the road segments of the digital map data, for example solely dependent on a distance between the respective road segments and the current location. It is also possible that the processor 102 considers the network of the road segments when determining the accumulated energy consumption costs. E.g., it is possible that the processor retrieves energy consumption costs for the road segments from the digital map data of the map database 101, sums up those costs which are necessary to reach a respective road segment, and from this determines the accumulated energy consumption costs to reach the respective road segment. When the processor 102 performs the route search to obtain the route to the destination, it is possible that the determining of the accumulated energy consumption costs is restricted to those road segments being part of the route; however, it is also possible that the accumulated energy consumption costs are determined for all road segments within a given perimeter of the current location. The processor 102 is further configured to compare the current amount of available energy with the determined accumulated energy consumption costs to obtain an amount of available energy when reaching the respective road segment.

A graphic processor 106 is configured to calculate a map view based on the digital map data of the map database 101, the route obtained from the route search, and the amount of available energy for the road segments along the route as set forth above. The map view is diplayed on a display 103. Optionally, the map view may further comprise an indication of the cruising range of the vehicle, e.g., in the form of a range polygon.

The navigation system 100 further contains a positioning unit 107. The positioning unit 107 is configured to determine a current position of the navigation system 100. The navigation system 100 can be mounted in a vehicle such that the positioning unit 107 determines the current position of the vehicle. The positioning unit 107 can be a GPS or INS. It is also possible to use odometry data of the vehicle in order to determine the current location.

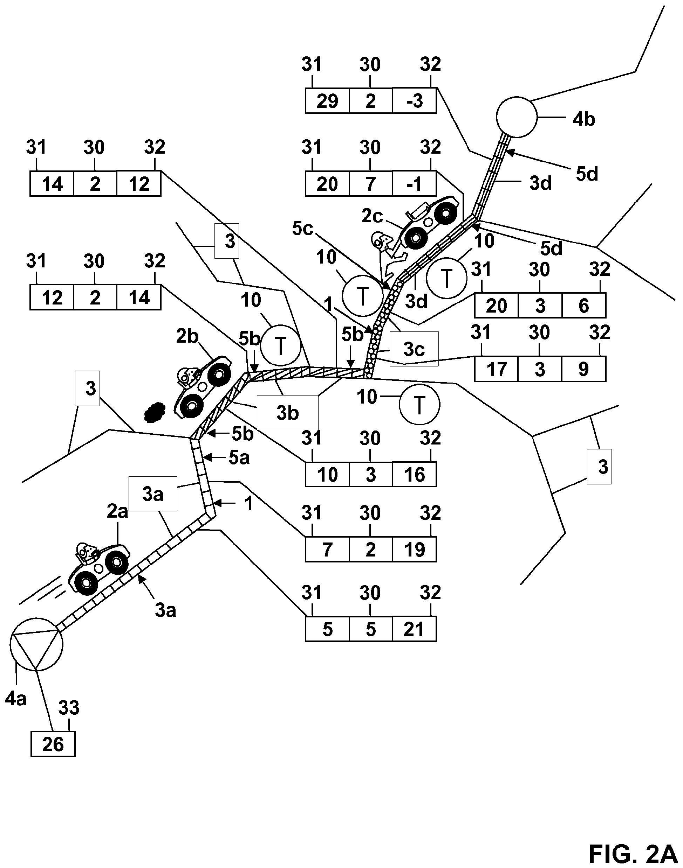

In FIG. 2A, the map view 200 is depicted. Illustrated is the route 1 obtained from the route search between the current location 4a of the vehicle and the destination 4b. Illustrated are the road segments 3, 3a, 3b, 3c, 3d. The road segments 3 are not contained in the route 1, while the route 1 is along the road segment 3a, 3b, 3c, 3d. Further indicated in the map view 200 are gas stations 10 which are located on or nearby the route 1.

Schematically illustrated is further a current amount of available energy 33 of the vehicle at the current location 4a. For each of the road segments 3a - 3d, energy consumption costs 30 and the accumulated energy consumption costs 31 to reach each one of the plurality of the road segment along the determined route 1 are illustrated. The value of the accumulated energy consumption costs 31 for a respective road segment 3a-3d is the sum of the values of the energy consumption costs 30 for each of the road segments 3a-3d between the current location 4a along the route 1 to the respective road segment. Furthermore indicated is the amount of available energy 32 when reaching the respective road segment 3a - 3d which is the difference between the current amount of available energy 33 and the accumulated energy consumption costs 31. It should be understood that in Fig. 2A the items 30, 31, 32, 33 are depicted in a parameterized manner, i.e., without the respective unites "litres" or "litres per kilometre". The actual values of the items 30, 31, 32, 33 may be derived by considering vehicle-specific fo driver-specific or other variable parameters together with the respective items 30, 31, 32, 33. It may also be possible to store the actual values for some of all of the items 30, 31, 32, 33 in the digital may data or obtain them from sensors or user input.

The current amount of available energy 33 has a value of 26 (arbitrary units). To travel along the first one 3a of the road segments along the route 1, the energy consumption costs 30 of value 5 are necessary. Therefore, the accumulated energy consumption costs 31 to reach the end of the first one 3a of the road segment 3a, 3b, 3c, 3d along the route 1 amount to a value of 5 as well. As can be seen from FIG. 2A, the accumulated energy consumption costs 31 to reach the destination 4b amount to a value of 29. This value is larger than the current amount of available energy 33 having a value of 26. Therefore, it is not possible to reach the destination 4b without refuelling.

It should be understood that the values 30, 31, 32, 33 may or may not be excplicitly graphically indicated in the map view 200. In any case, in the map view 200, the amount of available energy 31 is indicated using colours 5a-5d. The colours 5a-5d are illustrated in FIG. 2A by different filling patterns of the respective road segments 3a-3d. Furthermore, the amount of available energy 31 is illustrated using dynamically animated icons 2a-2c, which are graphical representatives of an operational state of the vehicle given the amount of available energy 31.

By graphically indicating the amount of available energy 31 for each one of the plurality of the road segments 3a-3d along the route 1 using the colours, it is possible for the user to perceive at one glance the probability of reaching a given one of the road segments 3a-3d given the current amount of available energy 33. This can help the user to plan refuelling along the route 1. In particular, the combination of depicting the gas stations 10 with the graphical indication of the amount of available energy 31 allows to determine a best one of the gas stations 10 along the route 1 to refuel.

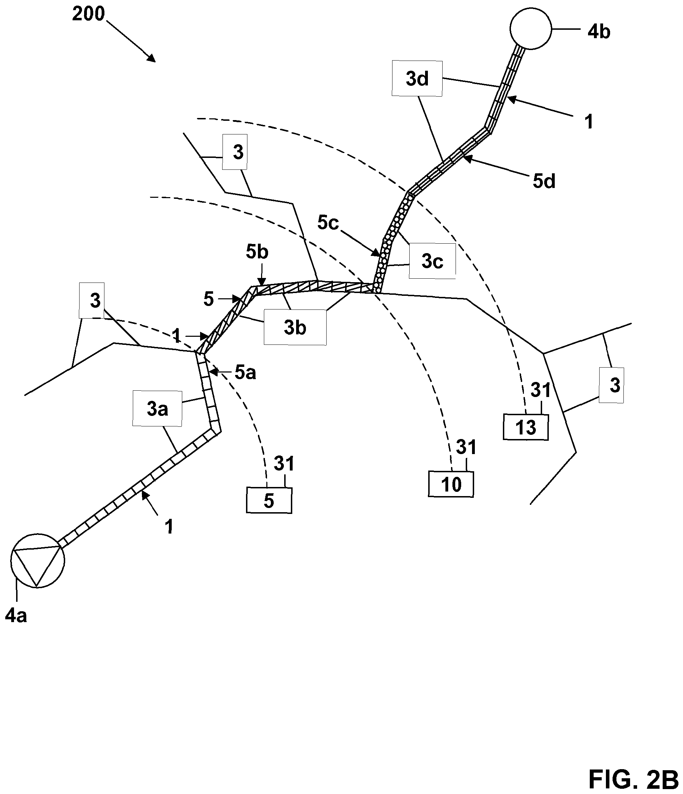

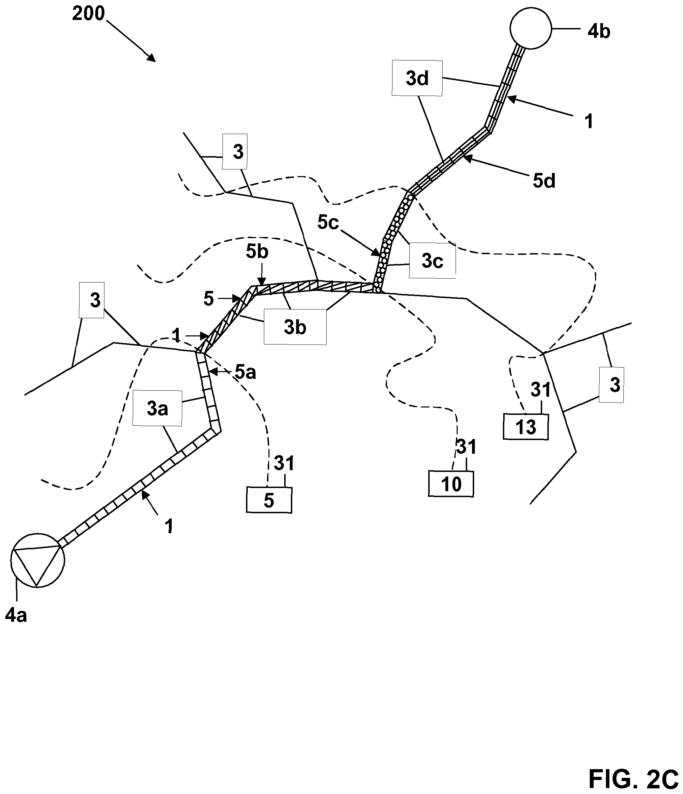

In the embodiment illustrated in FIG. 2A, the accumulated energy consumption costs 31 are determined based on the energy consumption costs 30 associated with each of the road segments along the route 1 as set forth above. An alternative embodiment is depicted in FIG. 2B. Here, the accumulated energy consumption costs 31 to travel to the respective road segment 3a-3d along the route 1 are determined independently of the network of the road segments 3, 3a-3d. The determining of the accumulated energy consumption costs 31 is dependent on a distance between the current location and the respective road segment, as indicated in FIG. 2B by the dashed semi-circles. The distance may be along a directed connection (shortest distance) or along the route. Together with an average energy consumption, e.g., a moving average of the energy consumption or a historical average energy consumption, the actual accumulated energy consumption costs 31, e.g., in liters or a parameterized value, necessary to travel the given distance can be determined. The road segments 3a-3d can be associated with the respective accumulated energy consumption cost 31. In FIG. 2C yet another alternative embodiment is depicted. The accumulated energy consumption costs are determined based on a lenght of the respective road segments and an elevation of the respective road segments. A more complicated spatial dependency of the energy consumption costs may result.

In FIG. 3, a correlation 34 between the amount of available energy 32 at the respective road segment 3a-3d of the route 1 and the colours 5a-5d is illustrated. E.g. the green colour 5a is used in the interval between 31%-100% of the current amount of available energy 32 with respect to a maximum amount of available energy. The correlation 34 can be pre-defined or it is possible that the correlation 34 is received via the user interface 104 of the navigation system 100. The user may specify a correlation 34 according to his needs. FIG. 3 is illustrative only; more or fewer colors 5a-5d may be used, e.g., within the complete range between 0% and 100%.

While in the FIGs. 2A, 2B, 2C, 3, distinct and discrete colours 5a-5d are used, it is possible to indicate neighbouring road segments with gradually changing colours in the map view 200. E.g., at the boundary between the colours 5b, 5c, a gradual changeover between orange and brown may be used when illustrating the road segments 3b, 3c. Such dependencies can be explicitly defined by the correlation 34 or can be automatically added by the graphics processor 106 to the correlation 34 when generating the map view.

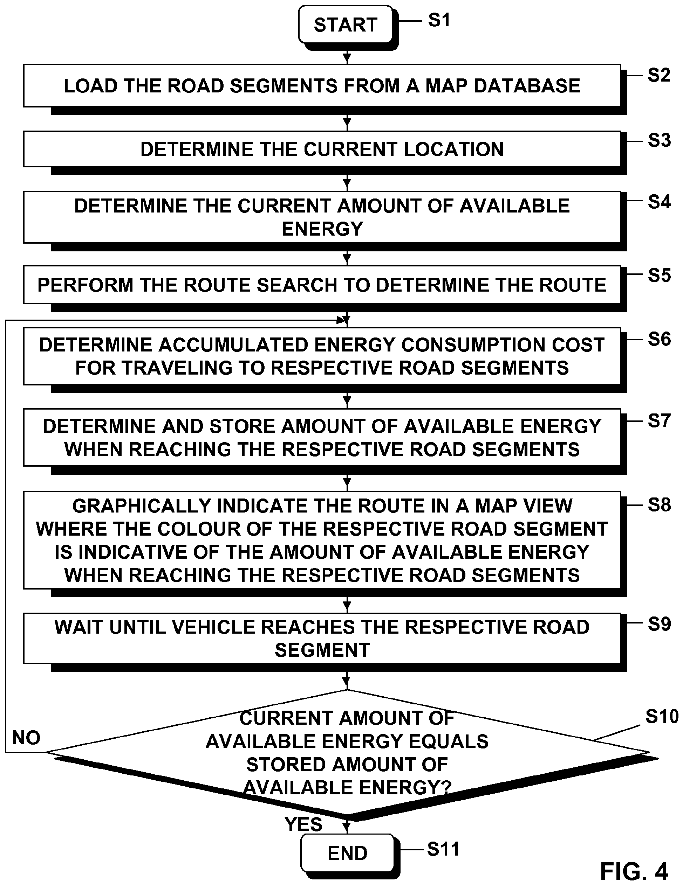

In FIG. 4, a flowchart of a method of operating the navigation system 100 according to various embodiments of the invention is depicted. The method starts with step S1. In step S2, the road segments are loaded from the map database 101. Next, in step S3 the current location is determined, e.g., by the positioning unit 10.

In step S4, the current amount of available energy 33 is determined. In step S4, the determining can occur using sensor data of the sensor 105 providing a current fuel level or state of charge for an electrically powered vehicle. It is also possible that the navigation system 100 is a dashboard navigation system which does not have a connection to such sensor data of the vehicle. Therefore, it is also possible that the determining in step S4 is based on a user input and/or pre-defined system settings of the navigation system 100. Such pre-defined system settings can relate to the type of the vehicle in which the navigation system 100 is used, historical driver habits (such as historical average velocity, gear change habits, etc.), and an average energy consumption. Also such pre-defined system settings may be entered by the user via the user interface 104 of the navigation system 100 or can be pre-defined, e.g., by the manufacturer of the navigation system 100.

Next, in step S5, the route search is performed by the processor 102 to determine the route 1. The route search can include execution of various algorithms known in the art to provide optimized routes between the origin 4a and the destination 4b. The route obtained from the route search in step S5 can be optimized with respect to various parameters, such as travel time, distance, energy consumption, or a combination thereof. Depending on the particular scenario, the route search in step S5 considers costs associated with the road segments obtained in step S2 which relate to travel time, distance, energy consumption, or a combination thereof. In case the route search is performed with respect to the energy consumption costs 30, the route 1 is a so-called eco-route. The route 1 in such a case is optimized with respect to total energy consumption, i.e. the route 1 corresponds to the path between the origin 4a and the destination 4b which uses a minimum amount of energy. Various techniques are known to the skilled person to perfom the route search in step S5 such that there is no need to discuss further details in this context.

Next, in step S6, accumulated energy consumption costs 31 for travelling to each of the road segments 3a - 3d along the route 1 of step S5 are determined. When the map database of S2 provides the energy consumption costs 30 for each of the road segments along the route 1, the determining in step S6 can be based on these energy consumption costs 30. In another simple embodiment, the accumulated energy consumption costs 31 are determined based on a distance between the respective road segments 3a-3d and the current location 4a. The distance may be along a directed connection (shortest distance) or along the route. E.g., larger (shorter) distances can correspond to larger (smaller) accumulated energy consumption costs 31 needed for travelling to the respective road segment 3a-3d. It is also possible to consider other parameters in step S6, such as time of the day, traffic jams, traffic messages, road closure, elevation differences, terrain, wheather, etc. It may be possible, additionally or alternatively, to consider height information, e.g., relative height differences to a current elevation at the vehicle location.

In particular, the accumulated energy consumption costs may correspond to an actual value or amount of energy / fuel necessary. For both embodiments as set forth above, i.e., the determining of the accumulated energy consumption costs 31 based on energy consumption costs 30 or based on other parameters, it is also possible to base the determining to this respect on pre-defined system settings, such as the type of the vehicle, historical driver habits, average energy consumption, e.g., a moving average energy consumption, or other historical personalized parameters. Such historical personalized parameters can be combined with parametrized energy consumption costs 30 in order to yield an actual value for the accumulated energy consumption cost 31, e.g., specifying the amount of fuel in litres.

In step S7, the amount of available energy 32 when reaching the respective road segment along the route 1 is determined and stored. In particular, in step S7, the current amount of available energy 33 as determined in step S4 can be compared with the accumulated energy consumption cost 31 as determined in step S6. E.g., the accumulated energy consumption costs 31 may be substracted from the current amount of available energy 33.

In step S8, the route 1 is graphically indicated in the map view 200, wherein the colours of the respective road segments 3a-3d are indicative of the amount of available energy of the respective road segment as determined in step S7. The colours can be chosen based on the correlation 34 such that they have a commonly understood announcement effect. E.g., green colour can indicate a large amount of available energy while red colour can indicate zero amount of available energy. Other embodiments are possible. A user may manually specify the colours associated with the amount of available energy 32 via the correlation 34. Step S8 can be performed by the graphics processing unit 106.

Next, in step S9, it is waited until the vehicle reaches a given one of the respective road segments for which in step S7 the amount of available energy has been determined and stored. Once the vehicle reaches the respective road segment, step S10 is executed. In step S10 it is determined whether the current amount of available energy at that moment equals the previously stored amount of available energy as determined in step S7. In other words, in step S10, it is checked how accurate the determining in step S7 has been, i.e., validity of the estimation is verified. If in step S10 it is determined that the current amount of available energy differs considerably from the stored amount of available energy, steps S6-S9 are executed anew for the road segments ahead. This means that the determining of the amount of available energy is performed anew for those road segments which are still ahead.

Otherwise, the method ends in step S11. It may be possible to perform the method anew until the target is reached. E.g. the performing may occur at a given refresh rate. Alternatively or additionally in step S10, it may be checked whether the engine is still running and/or if the target has not been reached and/or guidance has been stopped; and in the affirmative, execute steps S3-S9 anew.

The disclosure has been shown and described with respect to various embodiments of the invention. Equivalents and modifications will accord to other skilled in the art upon reading and understanding the specification. The various embodiments and the equivalents and modifications are limited only by the scope of the independent claims.

## Claims

1. A method of operating a navigation system (100) of a vehicle, the method comprising:
- performing a route search to determine a route (1) along road segments (3, 3a, 3b, 3c, 3d) from a current location (4a) of the vehicle to a destination (4b),
- determining a current amount of available energy (33) of the vehicle,
- determining accumulated energy consumption costs (31) required for travelling to a respective one of the plurality of the road segments (3, 3a, 3b, 3c, 3d) along the determined route (1),
- for a plurality of the road segments (3, 3a, 3b, 3c, 3d), comparing the current amount of available energy (33) with the accumulated energy consumption costs (31) to obtain an amount of available energy (32) when reaching the respective road segment,
- graphically indicating the route (1) in a map view (200), wherein each of the plurality of the road segments (3, 3a, 3b, 3c, 3d) is indicated using colours (5a, 5b, 5c, 5d), the colours (5a, 5b, 5c, 5d) being indicative of the amount of available energy (32) when reaching the respective road segment,
**characterized in that** some of the used colours (5a, 5b, 5c, 5d) are indicative of a intermediate amount of available energy (32) situated between a maximum level of available energy and no available energy,
wherein consecutive road segments (3, 3a, 3b, 3c, 3d) in the map view (200) are indicated using gradually changing colours (5a, 5b, 5c, 5d).

2. The method of claim 1, wherein the accumulated energy consumption costs (31) to travel to the respective road segment (3, 3a, 3b, 3c, 3d) are determined based on energy consumption costs (30) associated with the road segments (3, 3a, 3b, 3c, 3d) along the route (1) between the current location (4a) and the respective road segment (3, 3a, 3b, 3c, 3d).

3. The method of claim 2, wherein the route search is performed using the energy consumption costs (30) associated with the road segments (3, 3a, 3b, 3c, 3d) to determine the route (1) being optimized with respect to energy consumption costs necessary to reach the destination (4b).

4. The method of any of the claims 1 - 3, wherein the determining of the current amount of available energy (33) is based on sensor data of a fuel level meter (105).

5. The method of any of the claims 1 - 3, wherein the determining of the current amount of available energy (33) is based on a user input and / or on predefined system settings of the navigation system (100).

6. The method of claim 5, wherein the predefined system settings relate to elements selected from the group consisting of: type of the vehicle, historical driver habits, average fuel consumption, vehicle consumption curves.

7. The method of any of the preceding claims, further comprising:
- receiving, from a user interface (104), a user setting of a correlation between the colours (5a, 5b, 5c, 5d) and the amount of available energy (32) when reaching the respective road segment.

8. The method of any of claims 1 - 6, further comprising:
- establishing a correlation between the colours (5a, 5b, 5c, 5d) and the amount of available energy (32) when reaching the respective road segment (3, 3a, 3b, 3c, 3d) such that the colours (5a, 5b, 5c, 5d) have an announcement effect.

9. The method of any of the preceding claims, wherein at least some of the plurality of the road segments (3, 3a, 3b, 3c, 3d) are further indicated with associated icons (2a, 2b, 2c), the icons (2a, 2b, 2c) being graphical representations of an operational state of the vehicle given the respective amount of available energy (32) when reaching the respective road segment (3, 3a, 3b, 3c, 3d).

10. The method of claim 9, wherein the icons (2a, 2b, 2c) are animated icons.

11. The method of any of the preceding claims, wherein the determining of the current amount of available energy (33), the determining of the accumulated energy consumption costs (31), the comparing of the current amount of available energy (33) with the accumulated energy consumption costs (31), and the graphically indicating is continuously performed using a refresh rate.

12. The method of any of claims 1 - 10, further comprising:
- storing the amount of available energy (32) when reaching the respective road segment (3, 3a, 3b, 3c, 3d) and,
when reaching the respective road segment, further comprising:
- determining the current amount of available energy (33),
- executing a threshold comparison between the previously stored amount of available energy (32) and the current amount of available energy (33), and
- selectively performing anew, based on the threshold comparison, for the respective road segments (3, 3a, 3b, 3c, 3d) ahead:
the determining of the accumulated energy consumption costs (31), the comparing of the current amount of available energy (33) with the accumulated energy consumption costs (31), and the graphically indicating.

13. A navigation system (100) for use in a vehicle, comprising:
- a positioning unit (107) being configured to determine a current location (4a) of the vehicle,
- a processor (102 being configured to perform the following steps:
- performing a route search to determine a route (1) along road segments (3, 3a, 3b, 3c, 3d) from the current location (4a) of the vehicle to a destination (4b),
- determining a current amount of available energy (33) of the vehicle,
- determining accumulated energy consumption costs (31) required for travelling to a respective one of the plurality of the road segments (3, 3a, 3b, 3c, 3d) along the determined route (1),
- for a plurality of the road segments (3, 3a, 3b, 3c, 3d), comparing the current amount of available energy (33) with the accumulated energy consumption costs (31) to obtain an amount of available energy (32) when reaching the respective road segment,
- a display (103) being configured to perform the following step:
- graphically indicating the route (1) in a map view (200), wherein each of the plurality of the road segments (3, 3a, 3b, 3c, 3d) is indicated using colours (5a, 5b, 5c, 5d), the colours (5a, 5b, 5c, 5d) being indicative of the amount of available energy (32) when reaching the respective road segment,
**characterized in that**
some of the used colours (5a, 5b, 5c, 5d) are indicative of an intermediate amount of available energy (32) situated between a maximum level of available energy and no available energy,
wherein consecutive road segments (3, 3a, 3b, 3c, 3d) in the map view (200) are indicated using gradually changing colours (5a, 5b, 5c, 5d).

14. The navigation system (100) of claim 13, wherein the navigation system (100) is further configured to perform a method according to any of claims 1 - 12.

## Patentansprüche

1. Verfahren zur Bedienung eines Navigationssystems (100) eines Fahrzeugs, wobei das Verfahren Folgendes umfasst:
- Durchführen einer Routensuche, um eine Route (1) entlang von Straßensegmenten (3, 3a, 3b, 3c, 3d) von einer aktuellen Position (4a) des Fahrzeugs zu einem Ziel (4b) zu bestimmen,
- Bestimmen einer aktuellen Menge von verfügbarer Energie (33) des Fahrzeugs,
- Bestimmen von aufgelaufenen Energieverbrauchskosten (31), die zum Fahren zu einer entsprechenden der Vielzahl von Straßensegmenten (3, 3a, 3b, 3c, 3d) entlang der bestimmten Route (1) erforderlich sind.
- Vergleichen der aktuellen Menge von verfügbarer Energie (33) mit den aufgelaufenen Energieverbrauchskosten (31) für eine Vielzahl der Straßensegmente (3, 3a, 3b, 3c, 3d), um beim Erreichen des entsprechenden Straßensegments eine Menge von verfügbarer Energie (32) zu erhalten,
- graphisches Anzeigen der Route (1) in einer Kartenansicht (200), wobei jede der Vielzahl von Straßensegmenten (3, 3a, 3b, 3c, 3d) unter Verwendung von Farben (5a, 5b, 5c, 5d) angezeigt wird, wobei die Farben (5a, 5b, 5c, 5d) die Menge von verfügbarer Energie (32) beim Erreichen des entsprechenden Straßensegments anzeigen,
**dadurch gekennzeichnet, dass**
einige der verwendeten Farben (5a, 5b, 5c, 5d) eine Zwischenmenge von verfügbarer Energie (32) anzeigen, die sich zwischen einem Maximalniveau von verfügbarer Energie und keiner verfügbaren Energie befindet,
wobei aufeinanderfolgende Straßensegmente (3, 3a, 3b, 3c, 3d) in der Kartenansicht (200) unter Verwendung von sich allmählich verändernden Farben (5a, 5b, 5c, 5d) angezeigt werden.

2. Verfahren nach Anspruch 1, wobei die aufgelaufenen Energieverbrauchskosten (31), um zu dem entsprechenden Straßensegment (3, 3a, 3b, 3c, 3d) zu fahren, auf Grundlage der Energieverbrauchskosten (30), die den Straßensegmenten (3, 3a, 3b, 3c, 3d) entlang der Route (1) zwischen der aktuellen Position (4a) und dem entsprechenden Straßensegment (3, 3a, 3b, 3c, 3d) zugeordnet sind, bestimmt werden.

3. Verfahren nach Anspruch 2, wobei die Routensuche unter Verwendung der Energieverbrauchskosten (30), die den Straßensegmenten (3, 3a, 3b, 3c, 3d) zugeordnet sind, durchgeführt wird, um eine optimierte Route (1) in Bezug auf die zum Erreichen des Ziels (4b) erforderlichen Energieverbrauchskosten zu bestimmen.

4. Verfahren nach einem der Ansprüche 1-3, wobei dem Bestimmen der aktuellen Menge von verfügbarer Energie (33) Sensordaten eines Kraftstofffüllstandmessers (105) zugrunde liegen.

5. Verfahren nach einem der Ansprüche 1-3, wobei dem Bestimmen der aktuellen Menge von verfügbarer Energie (33) eine Benutzereingabe und/oder vordefinierte Systemeinstellungen des Navigationssystems (100) zugrunde liegen.

6. Verfahren nach Anspruch 5, wobei sich die vordefinierten Systemeinstellungen auf Elemente beziehen, die aus der aus Folgendem bestehenden Gruppe ausgewählt sind: Fahrzeugtyp, Fahrverhaltenschronik, durchschnittlicher Kraftstoffverbrauch, Verbrauchskurven des Fahrzeugs.

7. Verfahren nach einem der vorhergehenden Ansprüche, ferner umfassend:
- Empfangen einer Benutzereinstellung eines Zusammenhangs zwischen den Farben (5a, 5b, 5c, 5d) und der Menge von verfügbarer Energie (32) von einer Benutzerschnittstelle (104), beim Erreichen des entsprechenden Straßensegments.

8. Verfahren nach einem der Ansprüche 1-6, ferner umfassend:
- Erstellen eines Zusammenhangs zwischen den Farben (5a, 5b, 5c, 5d) und der Menge von verfügbarer Energie (32) beim Erreichen des entsprechenden Straßensegments (3, 3a, 3b, 3c, 3d), sodass die Farben (5a, 5b, 5c, 5d) einen Ankündigungseffekt aufweisen.

9. Verfahren nach einem der vorhergehenden Ansprüche, wobei zumindest einige der Vielzahl von Straßensegmenten (3, 3a, 3b, 3c, 3d) ferner durch zugeordnete Symbole (2a, 2b, 2c) angezeigt werden, wobei die Symbole (2a, 2b, 2c) graphische Darstellungen eines Betriebszustands des Fahrzeugs unter Berücksichtigung der entsprechenden Menge von verfügbarer Energie (32) beim Erreichen des entsprechenden Straßensegments (3, 3a, 3b, 3c, 3d) sind.

10. Verfahren nach Anspruch 9, wobei die Symbole (2a, 2b, 2c) animierte Symbole sind.

11. Verfahren nach einem der vorhergehenden Ansprüche, wobei das Bestimmen der aktuellen Menge von verfügbarer Energie (33), das Bestimmen der aufgelaufenen Energieverbrauchskosten (31), das Vergleichen der aktuellen Menge von verfügbarer Energie (33) mit den aufgelaufenen Energieverbrauchskosten (31) und das graphische Anzeigen unter Verwendung einer Aktualisierungsfrequenz kontinuierlich durchgeführt wird.

12. Verfahren nach einem der Ansprüche 1-10, ferner umfassend:
- Speichern der Menge von verfügbarer Energie (32) beim Erreichen des entsprechenden Straßensegments (3, 3a, 3b, 3c, 3d) und
beim Erreichen des entsprechenden Straßensegments ferner umfassend:
- Bestimmen der aktuellen Menge von verfügbarer Energie (33),
- Ausführen eines Schwellenwertvergleichs zwischen der vorangehend gespeicherten Menge von verfügbarer Energie (32) und der aktuellen Menge von verfügbarer Energie (33) und
- erneutes, selektives Durchführen, auf Grundlage des Schwellenwertvergleichs, für die entsprechenden nächsten Straßensegmente (3, 3a, 3b, 3c, 3d):
- des Bestimmens der aufgelaufenen Energieverbrauchskosten (31), des Vergleichens der aktuellen Menge von verfügbarer Energie (33) mit den aufgelaufenen Energieverbrauchskosten (31) und des graphischen Anzeigens.

13. Navigationssystem (100) zur Verwendung in einem Fahrzeug, umfassend:
- eine Positioniereinheit (107), die konfiguriert ist, um eine aktuelle Position (4a) des Fahrzeugs zu bestimmen,
- einen Prozessor (102), der konfiguriert ist, um die folgenden Schritte durchzuführen:
- Durchführen einer Routensuche, um eine Route (1) entlang von Straßensegmenten (3, 3a, 3b, 3c, 3d) von der aktuellen Position (4a) des Fahrzeugs zu einem Ziel (4b) zu bestimmen,
- Bestimmen einer aktuellen Menge von verfügbarer Energie (33) des Fahrzeugs,
- Bestimmen von aufgelaufenen Energieverbrauchskosten (31), die zum Fahren zu einer entsprechenden der Vielzahl von Straßensegmenten (3, 3a, 3b, 3c, 3d) entlang der bestimmten Route (1) erforderlich sind.
- Vergleichen der aktuellen Menge von verfügbarer Energie (33) mit den aufgelaufenen Energieverbrauchskosten (31) für eine Vielzahl der Straßensegmente (3, 3a, 3b, 3c, 3d), um beim Erreichen des entsprechenden Straßensegments eine Menge von verfügbarer Energie (32) zu erhalten,
- eine Anzeige (103), die konfiguriert ist, um den folgenden Schritt durchzuführen:
- graphisches Anzeigen der Route (1) in einer Kartenansicht (200), wobei jede der Vielzahl von Straßensegmenten (3, 3a, 3b, 3c, 3d) unter Verwendung von Farben (5a, 5b, 5c, 5d) angezeigt wird, wobei die Farben (5a, 5b, 5c, 5d) die Menge von verfügbarer Energie (32) beim Erreichen des entsprechenden Straßensegments anzeigen,
**dadurch gekennzeichnet, dass**
einige der verwendeten Farben (5a, 5b, 5c, 5d) eine Zwischenmenge von verfügbarer Energie (32) anzeigen, die sich zwischen einem Maximalniveau von verfügbarer Energie und keiner verfügbaren Energie befindet,
wobei aufeinanderfolgende Straßensegmente (3, 3a, 3b, 3c, 3d) in der Kartenansicht (200) unter Verwendung von sich allmählich verändernden Farben (5a, 5b, 5c, 5d) angezeigt werden.

14. Navigationssystem (100) nach Anspruch 13, wobei das Navigationssystem (100) ferner konfiguriert ist, um ein Verfahren nach einem der Ansprüche 1-12 durchzuführen.

## Revendications

1. Procédé de fonctionnement d'un système de navigation (100) d'un véhicule, le procédé comprenant :
- l'exécution d'une recherche d'itinéraire pour déterminer un itinéraire (1) le long de segments de route (3, 3a, 3b, 3c, 3d) d'une position actuelle (4a) du véhicule à une destination (4b),
- la détermination d'une quantité actuelle d'énergie disponible (33) du véhicule,
- la détermination de coûts de consommation d'énergie cumulés (31) nécessaires pour se déplacer à l'un respectif de la pluralité des segments de route (3, 3a, 3b, 3c, 3d) le long de l'itinéraire déterminé (1),
- pour une pluralité des segments de route (3, 3a, 3b, 3c, 3d), la comparaison de la quantité actuelle d'énergie disponible (33) avec les coûts de consommation d'énergie cumulés (31) pour obtenir une quantité d'énergie disponible (32) au moment d'atteindre le segment de route respectif,
- l'indication graphique de l'itinéraire (1) dans une vue cartographique (200), dans laquelle chacun de la pluralité des segments de route (3, 3a, 3b, 3c, 3d) est indiqué en utilisant des couleurs (5a, 5b, 5c, 5d), les couleurs (5a, 5b, 5c, 5d) étant indicatives de la quantité d'énergie disponible (32) au moment d'atteindre le segment de route respectif,
**caractérisé en ce que**
certaines des couleurs utilisées (5a, 5b, 5c, 5d) sont indicatives d'une quantité d'énergie disponible intermédiaire (32) située entre un niveau maximal d'énergie disponible et aucune énergie disponible,
dans lequel des segments de route consécutifs (3, 3a, 3b, 3c, 3d) dans la vue cartographique (200) sont indiqués en utilisant des couleurs changeant progressivement (5a, 5b, 5c, 5d).

2. Procédé selon la revendication 1, dans lequel les coûts de consommation d'énergie cumulés (31) pour se déplacer au segment de route respectif (3, 3a, 3b, 3c, 3d) sont déterminés sur la base de coûts de consommation d'énergie (30) associés aux segments de route (3, 3a, 3b, 3c, 3d) le long de l'itinéraire (1) entre la position actuelle (4a) et le segment de route respectif (3, 3a, 3b, 3c, 3d).

3. Procédé selon la revendication 2, dans lequel la recherche d'itinéraire est effectuée en utilisant les coûts de consommation d'énergie (30) associés aux segments de route (3, 3a, 3b, 3c, 3d) pour déterminer l'itinéraire (1) qui sont optimisés par rapport à des coûts de consommation d'énergie nécessaires pour atteindre la destination (4b).

4. Procédé selon l'une quelconque des revendications 1 à 3, dans lequel la détermination de la quantité actuelle d'énergie disponible (33) est basée sur des données de capteur d'un dispositif de mesure de niveau de carburant (105).

5. Procédé selon l'une quelconque des revendications 1 à 3, dans lequel la détermination de la quantité actuelle d'énergie disponible (33) est basée sur une entrée d'utilisateur et/ou sur des paramètres de système prédéfinis du système de navigation (100).

6. Procédé selon la revendication 5, dans lequel les paramètres de système prédéfinis concernent des éléments sélectionnés à partir du groupe comprenant : un type du véhicule, des habitudes historiques du conducteur, une consommation moyenne de carburant, des courbes de consommation du véhicule.

7. Procédé selon l'une quelconque des revendications précédentes, comprenant en outre :
- la réception, à partir d'une interface utilisateur (104), d'un réglage d'utilisateur d'une corrélation entre les couleurs (5a, 5b, 5c, 5d) et la quantité d'énergie disponible (32) au moment d'atteindre le segment de route respectif.

8. Procédé selon l'une quelconque des revendications 1 à 6, comprenant en outre :
- l'établissement d'une corrélation entre les couleurs (5a, 5b, 5c, 5d) et la quantité d'énergie disponible (32) au moment d'atteindre le segment de route respectif (3, 3a, 3b, 3c, 3d) de manière que les couleurs (5a, 5b, 5c, 5d) aient un effet d'annonce.

9. Procédé selon l'une quelconque des revendications précédentes, dans lequel au moins certains de la pluralité des segments de route (3, 3a, 3b, 3c, 3d) sont indiqués en outre avec des icônes associées (2a, 2b, 2c), les icônes (2a, 2b, 2c) étant des représentations graphiques d'un état de fonctionnement du véhicule étant donnée la quantité d'énergie disponible respective (32) au moment d'atteindre le segment de route respectif (3, 3a, 3b, 3c, 3d).

10. Procédé selon la revendication 9, dans lequel les icônes (2a, 2b, 2c) sont des icônes animées.

11. Procédé selon l'une quelconque des revendications précédentes, dans lequel la détermination de la quantité actuelle d'énergie disponible (33), la détermination des coûts de consommation d'énergie cumulés (31), la comparaison de la quantité actuelle d'énergie disponible (33) avec les coûts de consommation d'énergie cumulés (31) et l'indication graphique sont effectuées de manière continue en utilisant une cadence de rafraichissement.

12. Procédé selon l'une quelconque des revendications 1 à 10, comprenant en outre :
- le stockage de la quantité d'énergie disponible (32) au moment d'atteindre le segment de route respectif (3, 3a, 3b, 3c, 3d) et,
au moment d'atteindre le segment de route respectif, comprenant en outre :
- la détermination de la quantité actuelle d'énergie disponible (33),
- l'exécution d'une comparaison de seuil entre la quantité d'énergie disponible (32) précédemment stockée et la quantité actuelle d'énergie disponible (33), et
- l'exécution sélective à nouveau, sur la base de la comparaison de seuil, pour les segments de route respectif (3, 3a, 3b, 3c, 3d) en avant, de :
la détermination de coûts de consommation d'énergie cumulés (31), la comparaison de la quantité actuelle d'énergie disponible (33) avec les coûts de consommation d'énergie cumulés (31) et l'indication graphique.

13. Système de navigation (100) pour l'utilisation dans un véhicule, comprenant :
- une unité de localisation (107) qui est configurée pour déterminer une position actuelle (4a) du véhicule,
- un processeur (102) qui est configuré pour effectuer les étapes suivantes :
- l'exécution d'une recherche d'itinéraire pour déterminer un itinéraire (1) le long de segments de route (3, 3a, 3b, 3c, 3d) d'une position actuelle (4a) du véhicule à une destination (4b),
- la détermination d'une quantité actuelle d'énergie disponible (33) du véhicule,
- la détermination de coûts de consommation d'énergie cumulés (31) nécessaires pour se déplacer à l'un respectif de la pluralité des segments de route (3, 3a, 3b, 3c, 3d) le long de l'itinéraire déterminé (1),
- pour une pluralité des segments de route (3, 3a, 3b, 3c, 3d), la comparaison de la quantité actuelle d'énergie disponible (33) avec les coûts de consommation d'énergie cumulés (31) pour obtenir une quantité d'énergie disponible (32) au moment d'atteindre le segment de route respectif,
- un dispositif d'affichage (103) étant configuré pour effectuer l'étape suivante :
- l'indication graphique de l'itinéraire (1) dans une vue cartographique (200), dans laquelle chacun de la pluralité des segments de route (3, 3a, 3b, 3c, 3d) est indiqué en utilisant des couleurs (5a, 5b, 5c, 5d), les couleurs (5a, 5b, 5c, 5d) étant indicatives de la quantité d'énergie disponible (32) au moment d'atteindre le segment de route respectif,
**caractérisé en ce que**
certaines des couleurs utilisées (5a, 5b, 5c, 5d) sont indicatives d'une quantité d'énergie disponible intermédiaire (32) située entre un niveau maximal d'énergie disponible et aucune énergie disponible,
dans lequel des segments de route consécutifs (3, 3a, 3b, 3c, 3d) dans la vue cartographique (200) sont indiqués en utilisant des couleurs changeant progressivement (5a, 5b, 5c, 5d).

14. Système de navigation (100) selon la revendication 13, dans lequel le système de navigation (100) est configuré en outre pour effectuer un procédé selon l'une quelconque des revendications 1 à 12.
